# EUROPÄISCHE PATENTSCHRIFT

(11) **EP 2 887 611 B1**
(45) Veröffentlichungstag und Bekanntmachung des Hinweises auf die Patenterteilung: **22.03.2017**
(21) Anmeldenummer: 14197740.5
(22) Anmeldetag: 12.12.2014
(51) Int. Cl.: H04L 29/06

(54) **VERFAHREN ZUR IDENTIFIZIERUNG EINES EMPFÄNGERS EINER DIGITALEN WARE IM RAHMEN EINES ONLINEGESCHÄFTS**
METHOD FOR IDENTIFYING A RECIPIENT OF A DIGITAL GOOD AS PART OF AN ONLINE TRANSACTION
PROCÉDÉ D'IDENTIFICATION D'UN DESTINATAIRE D'UNE MARCHANDISE NUMÉRIQUE DANS LE CADRE D'UNE TRANSACTION EN LIGNE

(30) Priorität: 19.12.2013 DE 102013114505
(43) Veröffentlichungstag der Anmeldung: 24.06.2015
(73) Patentinhaber: Deutsche Telekom AG, 53113 Bonn (DE)
(72) Erfinder: Baireuther, Otto, 64287 Darmstadt (DE); Gund, Norbert, 55120 Mainz (DE)
(74) Vertreter: Braun-Dullaeus Pannen Patent- und Rechtsanwälte

(56) Entgegenhaltungen:
- WO-A2-03/075197
- US-A1- 2002 016 831
- US-A1- 2007 022 469
- US-A1- 2013 074 164

## Beschreibung

Die Erfindung betrifft ein Verfahren zur Identifizierung eines Empfängers einer digitalen Ware im Rahmen eines Onlinegeschäfts.

Digitale Waren, insbesondere Musikdateien, Videodateien, Software, werden in großem Umfang über das Internet von einem Anbieter, z.B. dem Inhaber eines Online-Shops, an einen Empfänger vertrieben. Zwar registriert sich der Empfänger üblicherweise auf den Internetseiten des Anbieters. Die Registrierung wird aber nur in seltenen Fällen verifiziert. Stellt sich nach dem Versand der Ware heraus, dass der Empfänger falsche Angaben über seine Person und die Zahlungsmodalitäten gemacht hat, so lässt sich später der Empfänger nur schwer zur Rechenschaft ziehen. Wenn aber die Ware unmittelbar nach Abschluss des Kaufvertrages versendet wurde, bleibt der Anbieter auf dem Schaden sitzen.

Um Personen zu ermitteln, die im Internet illegal urheberrechtlich geschützte Werke vertreiben, wird bereits eine Rückwärtsverfolgung anhand der IP-Adresse vorgenommen. Wählt sich das DSL-Modem eines Teilnehmers in das Internet ein, so verwendet es zur Authentifizierung vom Internet Service Provider (ISP) bereitgestellte DSL-Zugangsdaten, umfassend einen DSL-Benutzernamen und ein DSL-Passwort. Der ISP überprüft diese Kennung anhand seiner Teilnehmerdatenbank und teilt dem Modem eine für diese DSL-Session gültige IP-Adresse zu. Anhand der Dokumentation dieser Zuordnung lässt sich ein Zusammenhang zwischen einer verwendeten IP-Adresse und dem zugehörigen Teilnehmer feststellen. Diesbezügliche Techniken werden zum Beispiel in den Druckschriften US2007/022469-A1, US2013/074164-A1 und WO03/075197-A2 vorgestellt.

Allerdings kann die DSL-Kennung z.B. durch Phishing gestohlen werden. Mit der gestohlenen DSL-Kennung meldet sich ein Betrüger über einen anderen Internetanschluss beim ISP ein und startet eine DSL-Session. Der ISP ordnet diese DSL-Kennung aber dem bestohlenen Teilnehmer zu. Wenn nun die der Betrüger in dieser DSL-Session ein Onlinegeschäft unter Angabe falscher Daten abwickelt, ist dessen wahre Identität nicht zu ermitteln. Vielmehr wird der bestohlene Teilnehmer zu unrecht als Empfänger ausgemacht. Insofern ist es Aufgabe der vorliegenden Erfindung die Sicherheit bei der Abwicklung von Onlinegeschäften zu erhöhen und insbesondere Vorkehrungen zu treffen, um Missbräuche im Internet zu vermeiden oder zumindest in Nachhinein aufzudecken. Die der Erfindung zugrundeliegende Aufgabe wird gelöst durch ein Verfahren nach Anspruch 1; bevorzugte Ausgestaltungen ergeben sich aus den abhängigen Ansprüchen.

Der Kern der Erfindung liegt insbesondere darin, dass die Nachverfolgung einer über das Internet versendeten Ware mit Hilfe von Hardwareelementen im Zugangsnetz erfolgt, die exakt einem Internetanschluss zugeordnet. Dieses Hardwareelement wird anspruchsgemäß durch das Netzelement dargestellt. Durch Rückverfolgung, über welches Hardwareelement die Ware tatsächlich ausgeliefert wird, kann nicht nur eine abstrakte Lieferadresse (z.B. IP-Adresse) bzw. ein abstrakter Empfänger (repräsentiert durch DSL-Kennung) identifiziert werden, sondern vielmehr eine örtliche (Liefer-) Adresse ermittelt werden, an oder über welche die Ware ausgeliefert wurde. Diese Nachverfolgbarkeit eröffnet eine Vielzahl von Möglichkeiten, um die Sicherheit bei der Abwicklung von Onlinegeschäften im Internet zu erhöhen.

Dafür sind anspruchsgemäß nun folgende Schritte vorgesehen:
Absenden des Datenpakets von dem Anbieter an den Empfänger,
Ermitteln eines Netzelements, welches einem einzigen Teilnehmeranschluss zugeordnet ist, über welches das Datenpaket transportiert wurde,
Identifizieren eines Internetanschlusses, der dem ermittelten Netzelement zugeordnet ist, und insbesondere auch eine Hausanschrift dieses Internetanschlusses, an welche das Datenpaket ausgeliefert wurde.

Das ermittelte Netzelement stellt vorzugsweise eine Schnittstelle zwischen einem Verbindungsnetz und einer Teilnehmeranschlussleitung dar. Die Teilnehmeranschlussleitung ist die drahtgebundene Leitung, insbesondere das Kupferleitungspaar oder das Koaxialkabel, welches von einer zentralen Verteilstelle des Netzbetreibers, z.B. ein Digital Subscriber Line Access Multiplexer (DSLAM) zu exakt einem Internetanschluss führt. Das Netzelement kann der Port des DSLAM sein.

Die Erfindung betrifft ferner ein Verfahren zur Erkennung eines Betrugsversuchs im Rahmen der Abwicklung eines Onlinegeschäfts. Dieses Verfahren umfasst die folgenden Verfahrensschritte:
Durchführen eines Verfahrens der oben beschriebenen Art im Rahmen eines ersten Onlinegeschäfts mit einem ersten Empfänger zur Ermittlung eines ersten Netzelements,
zusätzlich Ermitteln einer ersten DSL-Kennung, mit der der erste Empfänger im Internet eingeloggt ist;
erneutes Durchführen eines Verfahrens der oben beschriebenen Art im Rahmen eines zweiten Onlinegeschäfts mit einem zweiten Empfänger zur Ermittlung eines zweiten Netzelements;
zusätzlich Ermitteln einer zweiten DSL-Kennung, mit der der zweite Empfänger im Internet eingeloggt ist;
Abgleichen der ermittelten DSL-Kennungen und der ermittelten Netzelemente.

Ausgeben einer Warnmeldung für den Fall, dass während der Abwicklung der beiden Onlinegeschäfte zwar identische DSL-Kennungen, aber unterschiedliche Netzelemente ermittelt wurden.

Der Kern dieser Idee liegt darin, dass überprüft wird, ob die DSL-Zugangsdaten (DSL-Kennung und DSL-Passwort) für die Abwicklung von Onlinegeschäften von unterschiedlichen Internetanschlüssen aus verwendet werden. Da die DSL-Zugangsdaten (DSL-Kennung und DSL-Passwort) aber strenggenommen nur einem Internetanschluss zugeordnet sind, kann die Mehrfachverwendung auf Betrugsversuche hindeuten.

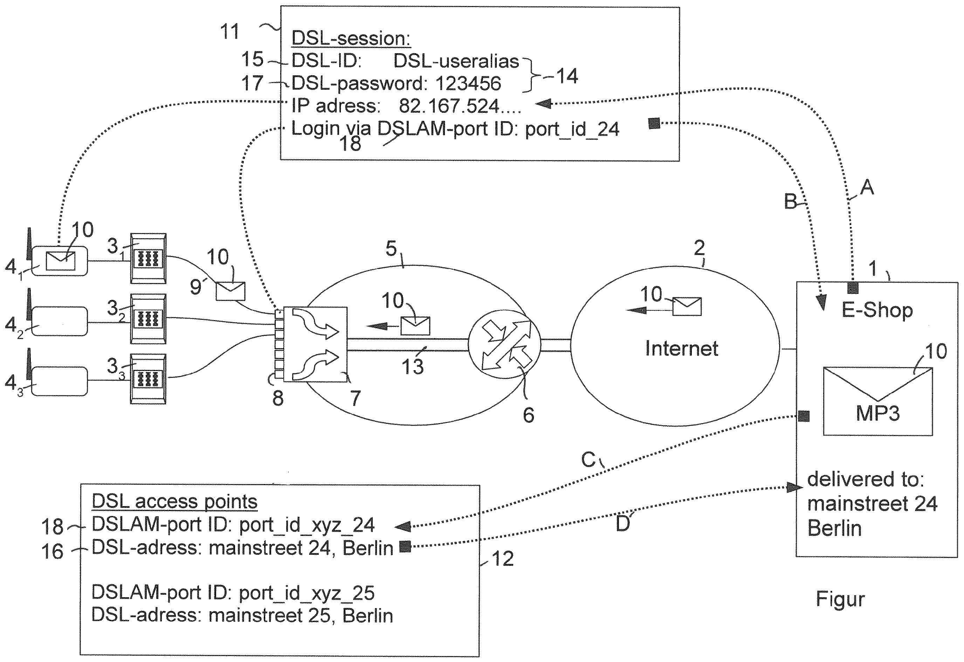

Die Erfindung wird anhand der Figur nachfolgend näher erläutert. Gezeigt ist ein Onlineshop 1, bei dem ein Nutzer eine digitale Ware 10, beispielsweise eine MP3-Datei, käuflich erwirbt. Die MP3-Datei ist in symbolisch durch einen Briefumschlag dargestellt; dieser Briefumschlag 10 wird nun über das Internet 2 zum Nutzer befördert. Der Nutzer ist symbolisiert dargestellt durch ein DSL-WLAN Modem 4, welches über einen Internetanschluss 3, dargestellt durch eine symbolisierte TAE-Dose, Zugang zum Internet hat. Der Internetanschluss 3 ist an ein Zugangsnetz 5 eines Netzanbieters angeschlossen. Das Zugangsnetz 5 dient dazu, den Internetanschluss 3 mit den Internet 2 zu verbinden.

Das Zugangsnetz 5 weist einen Digital Subscriber Line Access Multiplexer (DSLAM) 7 auf. Dieser DSLAM 7 umfasst wiederum eine Vielzahl von Ports 8. An jedem Port 8 ist genau ein Internetanschluss 3 drahtlos über eine Ein-zu-eins-Verdrahtung 9 angeschlossen, beispielsweise mittels eines Kupferleitungspaares oder eines Koaxialkabels, in modernen Zugangsnetzen auch mittels Glasfaserleitung. Der Port 8 stellt somit ein Netzelement dar, welches einem einzigen Internetanschluss 3 zugeordnet ist. Jeder der in der Figur gezeigten Internetanschlüsse 3 ist über einen anderen Port 8 an den DSLAM 7 angeschlossen. Im Gegensatz zum Port 7 kann der DSLAM 8 selbst lediglich als ein Netzelement angesehen werden, welches einer Vielzahl von Internetanschlüssen (also nicht nur einem einzigen Internetanschluss) zugeordnet ist.

Über eine Glasfaserleiter ist der DSLAM 7 mit einem Broadband Remote Access Router (BBRAR) 6 verbunden. Dieser BBRAR 6 stellt die Schnittstelle des Zugangnetzes 5 zum Internet 2 dar. Zwischen dem BBRAR 6 und den DLSAM- Port 8 existiert eine statische, logische Verschaltung für jeden Anschluss. Diese Verschaltung wird jedes Mal erneut erzeugt, wenn sich das Modem 4 in das Zugangsnetz 5 einwählt; die entsprechenden Informationen werden bei dem Aufbau der Internetverbindung des Anschlusses 3 in einem Sessionkontext in einem Remote Authentication Dial-In User Service Server (RADIUS-Server) 11 des Netzbetreibers abgelegt.

Wenn der Nutzer nun sein DSL-Modem 4 einschaltet, so meldet sich das DSL Modem beim RADIUS-Server 11 mit der im Modem 4 hinterlegten DSL-Kennung 15 und dem zugehörigen DSL-Passwort an 17. Diese beiden Werte bilden die benutzerindividuellen DSL-Zugangsdaten 14 und werden dem Anschlussinhaber vom Internet Service Provider (ISP) im Rahmen der Anschlussbereitstellung zur Verfügung gestellt. Der RADIUS-Server 11 vergibt dem Internetanschluss 3 im Rahmen der Anmeldung eine temporäre IP-Adresse und legt sie ebenfalls im Sessionkontext ab. Zusätzlich ist im RADIUS-Server 11 eine Identifikation des DSLAM-Ports 8 hinterlegt, über den die Verbindung des Internetanschluss in das Zugangsnetz erfolgt.

Die Unterscheidung in der Identifizierung anhand des DSLAM-Ports 8 und DSL-Kennung 15 ist von entschiedener Bedeutung. Mit einer DSL-Kennung 15 und dem zugehörigen Passwort kann sich ein Internetkunde über einen beliebigen Internetanschluss 3 in das Zugangsnetz 5 einwählen; eine netzseitige Überprüfung, ob sich der Nutzer denn auch von seinem eigenen Internetanschluss 3 aus anmeldet, wird nicht vorgenommen. So ist es bislang nicht möglich zu prüfen, welchen Internetanschluss 3, also wohin (und das "wohin" ist hier wirklich als örtliche Frage zu verstehen), die MP3-Datei 10 tatsächlich gesendet wurde.

Würde sich allerdings der Internetnutzer nun am einem anderen Modem 4₂ mit seinen DSL-Zugangsdaten anmelden und somit über einen anderen Internetanschluss 3₂ das Internet betreten, so lässt sich allein anhand einer abweichenden DSLAM-Port-ID erkennen, dass der Nutzer nun den Anschluss gewechselt hat. Die örtliche Lieferadresse der MP3-Datei 10 wäre dann eine andere.

Um nun zu verfolgen, an welchen Ort tatsächlich die MP3-Datei 10 geliefert wurde, wird nun zuerst seitens des Internetshops 1 eine erste Anfrage A an den RADIUS-Server 11 gestellt, der aufgrund der IP-Adresse die DSL-Session erkennen kann, aus der die Bestellung zur Lieferung der MP3-Datei 10 erfolgte bzw. an welche IP-Adresse die Lieferung erfolgt. Nun wird erfindungsgemäß, anders als bei den sogenannten Filesharing-Abmahnungen, ein örtlich definierbares Netzelement, nämlich der DSLAM-Port 8 ermittelt und als Ergebnis B ausgegeben, der der jeweiligen IP-Adresse zugewiesen ist. An eine Datenbank 12 des Zugangsnetzbetreibers wird nun eine Anfrage C gestellt, welche physikalische Hausanschrift 16 tatsächlich der DSLAM-Port-ID zugeordnet ist. Diese wird dann als Ergebnis D dem Onlineshop mitgeteilt. So lässt sich dann exakt ermitteln, von welchem Internetanschluss 3 tatsächlich eine Bestellung durchgeführt wurde bzw. an welchen Internetanschluss 3 die digitale Ware tatsächlich geliefert wurde.

Dieses Verfahren kann auch dazu verwendet werden, Betrugsversuche oder erfolgreich durchgeführte betrügerische Vorgehen aufzudecken. Denn in der Regel sollte ein Internetnutzer seine DSL-Zugangsdaten 14 ausschließlich in Verbindung mit seinem eigenen Internetzugang 3 einsetzen. Sollte also beispielsweise ein Kaufvorgang durchgeführt werden von einem Nutzer, in der sich mehrfach mit den selben DSL-Zugangsdaten 14 einwählt, die Einwahl aber jeweils über unterschiedliche DSLAM-Port-IDs 8 erfolgt, kann dies auf einen Missbrauch der DSL-Zugangsdaten 14 schließen. In einem solchen Fall können diese DSL-Zugangsdaten 14 gesperrt werden. Auf postalischem Weg können dem Endkunden dann neue Zugangsdaten 14 für seinen DSL-Anschluss mitgeteilt werden.

### Bezugszeichenliste

- 1: Internetshop
- 2: Internet
- 3: DSL-Anschluss
- 4: DSL-Modem
- 5: Zugangsnetz
- 6: BBRAR
- 7: DSLAM
- 8: Port
- 9: Teilnehmeranschlussleitung
- 10: Datenpaket
- 11: RADIUS Server
- 12: Datenbank des Netzbetreibers
- 13: Glasfaserleitung
- 14: DSL-Zugangsdaten
- 15: DSL-Kennung
- 16: Hausanschrift
- 17: DSL-Passwort
- 18: DSLAM-Port-ID

## Patentansprüche

1. Verfahren zur Identifizierung eines Empfängers (4) eines Datenpakets (10) umfassend eine digitale Ware im Rahmen eines Onlinegeschäfts, bei dem das Datenpaket (10) via Internet (2) von einem Anbieter (1) an den Empfänger (4) übersendet wird, wobei der Empfänger (4) über einen drahtgebundenen Internetanschluss (3) mit einer Schnittstelle (7) zu einem Verbindungsnetz (5), insbesondere einem Digital Subscriber Line Access Multiplexers, DSLAM, verfügt, wobei dem Internetanschluss (3) ein Port (8) der Schnittstelle (7) eindeutig zugeordnet ist, wobei dem Empfänger bei Einwahl in das Internet eine temporäre IP-Adresse zugewiesen wird, wobei das des Datenpaket (10) von dem Anbieter (1) an den Empfänger (4) abgesendet wird,
**dadurch gekennzeichnet, dass** seitens des Netzbetreibers eine Identifikation des eindeutig dem Empfänger (4) zugeordneten Ports (8) hinterlegt ist, über den die Verbindung des Internetanschluss des Empfängers in das Verbindungsnetz (5) erfolgt, wobei die Identifikation des Ports (8) ermittelt wird, über welchen das Datenpaket (10) transportiert wurde, wobei der Internetanschluss (3) identifiziert wird, der dem Port (8) zugeordnet ist, an den das Datenpaket (10) ausgeliefert wurde.

2. Verfahren nach Anspruch 1,
**dadurch gekennzeichnet,**
**dass** eine Hausanschrift (16) dieses Internetanschlusses (3) ermittelt wird.

3. Verfahren nach Anspruch 1 oder 2,
**dadurch gekennzeichnet,**
**dass** die logische Verschaltung zwischen dem Port und einem Access Router (6) erzeugt wird, wenn sich ein Modem des Empfängers in das Zugangsnetz (5) einwählt; wobei Informationen in einem Sessionkontext in einem Remote Authentication Dial-In User Service Server, RADIUS-Server, 11 eines Netzbetreibers abgelegt werden.

4. Verfahren nach Anspruch 3,
**dadurch gekennzeichnet,**
**dass** der Remote Authentication Dial-In Service Server, RADIUS-Server (11) dem Internetanschluss (3) im Rahmen der Anmeldung eine temporäre IP-Adresse vergibt und sie im Sessionkontext zusammen mit der Identifikation des ports (8) über das die Verbindung des Internetanschluss in das Zugangsnetz erfolgt, ablegt.

5. Verfahren zur Erkennung eines Betrugsversuchs im Rahmen der Abwicklung eines Onlinegeschäfts umfassend die folgenden Verfahrensschritte:
Durchführen des Verfahrens nach einem der vorherigen Ansprüche im Rahmen eines ersten Onlinegeschäfts mit einem ersten Empfänger (4) zur Ermittlung eines ersten Ports (8) einer Schnittstelle (7);
zusätzlich Ermitteln einer ersten DSL-Kennung (15), mit der der erste Empfänger (4) im Internet eingeloggt ist;
erneutes Durchführen des Verfahrens nach einem der vorherigen Ansprüche im Rahmen eines zweiten Onlinegeschäfts mit einem zweiten Empfänger (4) zur Ermittlung eines zweiten Ports (8) einer Schnittstelle (7);
zusätzlich Ermitteln einer zweiten DSL-Kennung (15), mit der der zweite Empfänger (4) im Internet eingeloggt ist;
Abgleichen der ermittelten DSL-Kennungen (15) und der ermittelten Ports (8);
Ausgeben einer Warnmeldung für den Fall, dass während der Abwicklung der beiden Onlinegeschäfte zwar identische DSL-Kennungen (15), aber unterschiedliche Ports (8) ermittelt wurden.

## Claims

1. A method for identifying a recipient (4) of a data packet (10) comprising a digital item as part of an online business in which the data packet (10) is transmitted via internet (2) from a supplier (1) to the recipient (4), wherein the recipient (4) has a wired internet connection (3) with an interface (7) to a connection network (5), in particular a digital subscriber line access multiplexer DSLAM, wherein the internet connection (3) is unambiguously assigned to a port (8) of the interface (7), wherein the recipient is assigned a temporary IP address when dialling up into the internet, wherein the data packet (10) is dispatched from the supplier (1) to the recipient (4), **characterized in that** an identification of the port (8) uniquely assigned to the recipient (4) is stored by the network operator, via which the connection of the internet connection of the recipient into the connecting network (5) is made, wherein the identification of the port (8) via which the data packet (10) was transported is determined, wherein the internet connection (3) assigned to the port (8) to which the data packet (10) was delivered is identified.

2. The method according to claim 1, **characterized in that** a house address (16) of the internet connection (3) is determined.

3. The method according to claim 1 or 2, **characterized in that** the logic connection between the port and an access router (6) is produced when a modem of the recipient dials into the access network (5), wherein information in a session context is stored in a remote authentication dial-in user service server, RADIUS server, (11) of a network operator.

4. The method according to claim 3, **characterized in that** the remote authentication dial-in user service server, RADIUS server, (11) allocates a temporary IP address to the internet connection (3) in the course of the registration and stores this in the session context together with the identification of the port (8) via which the connection of the internet connection into the access network is made.

5. Method for identifying an attempt at fraud in the course of the transaction of an online business comprising the following process steps:
performing the method according to any one of the preceding claims as part of a first online business with a first recipient (4) to determine a first port (8) of an interface (7);
additionally determining a first DSL identification (15) with which the first recipient (4) is logged into the internet;
again performing the method according to any one of the preceding claims as part of a second online business with a second recipient (4) to determine a second port (8) of an interface (7);
additionally determining a second DSL identification (15) with which the second recipient (4) is logged into the internet;
comparing the determined DSL identifications (15) and the determined ports (8); outputting a warning message in the event that during the transaction of the two online businesses, identical DSL identifications (15) but different ports (8) were determined.

## Revendications

1. Procédé destiné à identifier un destinataire (4) d'un paquet de données (100) comprenant un produit numérique dans le cadre d'une transaction en ligne, lors duquel le paquet de données (10) est transmis via Internet (2) par un fournisseur (1) au destinataire (4), le destinataire (4) disposant d'une connexion Internet (3) filaire sur une interface (7) vers un réseau de liaison (5), notamment un Digital Subscriber Line Access Multiplexer, DSLAM, un port (8) de l'interface (7) étant univoquement affecté à la connexion Internet (3),
lorsqu'il se connecte sur Internet, une adresse IP temporaire étant affectée au destinataire,
le paquet de données (10) étant envoyé au destinataire (4) par le fournisseur (1),
**caractérisé en ce que**
chez le gestionnaire de réseau est sauvegardée une identification du port univoquement affecté au destinataire (4), via lequel s'effectue la liaison de la connexion Internet du destinataire dans le réseau de liaison (5), l'identification du port (8) via lequel le paquet de données (10) a été transporté étant déterminée,
la connexion Internet (3) qui est affectée au port (8) vers lequel le paquet de données (10) a été livré étant identifiée.

2. Procédé selon la revendication 1,
**caractérisé en ce qu'**une adresse géographique (16) de cette connexion Internet (3) est déterminée.

3. Procédé selon la revendication 1 ou la revendication 2,
**caractérisée en ce que** le circuit logique entre le port et un routeur d'accès (6) s'établit lorsqu'un modem du destinataires se connecte dans le réseau d'accès (5) ; des informations étant sauvegardées dans un contexte de session dans un serveur Remote, Authentification Dial-in User Service, serveur RADIUS (11) d'un gestionnaire de réseau.

4. Procédé selon la revendication 3,
**caractérisé en ce que** dans le cadre de l'enregistrement, le serveur Remote Authentification Dial-in User Service, serveur RADIUS (11) attribue à la connexion Internet (3) une adresse IP temporaire et la sauvegarde dans le contexte de session, ensemble avec l'identification du port (8) via lequel s'effectue la liaison de la connexion Internet dans le réseau d'accès.

5. Procédé destiné à identifier une tentative de fraude dans le cadre du déroulement d'une transaction en ligne, comprenant les étapes de procédé suivantes :
de la réalisation du procédé selon l'une quelconque des revendications précédentes, dans le cadre d'une première transaction en ligne avec un premier destinataire (4), pour déterminer un premier port (8) d'une interface (7) ;
en supplément, de la détermination d'un premier identifiant DSL (15) via lequel le premier destinataire (4) est connecté sur Internet ;
de la réalisation réitérée du procédé selon l'une quelconque des revendications précédentes, dans le cadre d'une deuxième transaction en ligne avec un deuxième destinataire (4) pour déterminer un deuxième port (8) d'une interface (7) ;
de la détermination supplémentaire d'un deuxième identifiant DSL (15) via lequel le deuxième destinataire (4) est connecté sur Internet ;
de l'ajustage des identifiants DSL (15) déterminés et des ports (8) déterminés ;
de l'édition d'en message d'alerte pour le cas où pendant le déroulement des deux transactions en ligne, des identifiants DSL identiques, mais des ports (8) différents ont été déterminés.
